# EUROPÄISCHE PATENTSCHRIFT

(11) **EP 4 382 793 B1**
(45) Veröffentlichungstag und Bekanntmachung des Hinweises auf die Patenterteilung: **19.11.2025**
(21) Anmeldenummer: 23215022.7
(22) Anmeldetag: 07.12.2023
(51) Int. Cl.: F16L 21/08, F16L 21/02, F16L 21/03, F16L 21/06

(54) **KLEMMVORRICHTUNG ZUR AXIALSICHERUNG EINER MUFFENROHRVERBINDUNG UND MUFFENROHRVERBINDUNG SAMT EINER ENTSPRECHENDEN KLEMMVORRICHTUNG**
CLAMPING DEVICE FOR AXIALLY SECURING A SOCKET PIPE CONNECTION AND SOCKET PIPE CONNECTION TOGETHER WITH A CORRESPONDING CLAMPING DEVICE
DISPOSITIF DE SERRAGE POUR LA FIXATION AXIALE D'UN RACCORD DE TUYAU À MANCHON ET RACCORD DE TUYAU À MANCHON ET DISPOSITIF DE SERRAGE CORRESPONDANT

(30) Priorität: 07.12.2022 DE 102022132573
(43) Veröffentlichungstag der Anmeldung: 12.06.2024
(73) Patentinhaber: InnoDo AG, 8595 Altnau (CH)
(72) Erfinder: Bächle, Dieter, 8595 Altnau (CH)
(74) Vertreter: Patent- und Rechtsanwälte Behrmann Wagner PartG mbB

(56) Entgegenhaltungen:
- AT-U1- 8 709
- DE-T2- 69 209 765
- KR-B1- 101 775 642
- US-A- 4 465 330

## Beschreibung

Aus dem Stand der Technik sind in verschiedenen Anwendungsbereichen, beispielsweise aber keinesfalls ausschließlich in der Abgastechnik Muffenrohrverbindungen zur Verbindung zweier angrenzender oder ineinander übergehender Rohrleitungen bekannt. Dabei weist eine Rohrleitung einen endseitigen Muffenabschnitt auf, wobei in dem Muffenabschnitt innenliegend bevorzugt Dichtmittel aufgenommen und/oder angeordnet sind.

Ein zweites Rohr oder eine zweite Rohrleitung weist einen endseitigen Eintauchabschnitt auf, der bezüglich der Form, insbesondere des Durchmessers, so ausgestaltet ist, dass ein Einstecken oder Eintauchen in den Muffenabschnitt des ersten Rohrs oder der ersten Rohrleitung ermöglicht wird. Die Muffenrohrverbindung wird dabei in axialer Richtung in der Regel über Klemmkräfte gehalten, die bevorzugt über das Dichtelement des Muffenrohrabschnitts auf die Außenoberfläche des Eintauchabschnitts des zweiten Rohrs oder der zweiten Rohrleitung wirken.

In einigen Fällen ist eine endgültige Fixierung oder Sicherung der Muffenrohrverbindung nicht gewollt oder gewünscht, da eine thermische Ausdehnung in Axialrichtung über eine nicht fixierte Muffenrohrverbindung in gewissen Grenzen ausgeglichen werden kann. In anderen Fällen oder aufgrund von entsprechenden gesetzlichen Vorschriften kann es aber notwendig sein, dass eine grundsätzlich bekannte Muffenrohrverbindung zusätzlich in Axialrichtung gesichert wird, was bedeutet, dass die über die Muffenrohrverbindung miteinander verbundenen oder ineinander übergehenden Rohrleitungen gegeneinander in Axialrichtung gesichert werden, sodass ein ungewolltes oder unbeabsichtigtes Entfernen des Eintauchabschnitts der zweiten Rohrleitung aus dem Muffenrohrabschnitt der ersten Rohrleitung verhindert wird.

Um eine solche Muffenrohrverbindung in axialer Richtung zu sichern, sind aus dem Stand der Technik bereits unterschiedliche Lösungen bekannt, die aber in verschiedener Hinsicht nachteilig sind.

Die US 4 465 330 A offenbart eine mehrteilige Rohrverbindungsvorrichtung, wobei zwei aneinander endseitig anstoßende Rohrenden umfasst und abdichtend verbunden werden.

Die DE 692 09 765 T2 offenbart eine Verriegelungsvorrichtung, welche insbesondere zur Verriegelung einer Rohrleitung nach deren Verlegen vorgesehen ist, wobei eine Alternative zur Herstellung einer Schweißverbindung angeboten werden soll.

Die KR 101 775 642 B1 offenbart eine Rohrverbindungsvorrichtung zur Verbindung von zwei Rohrenden, wobei das Ende eines ersten Rohres in das Ende eines zweiten Rohres einsteckbar ist. Die Rohrverbindungsvorrichtung umfasst die Verbindungsstelle und verhindert eine Verschiebung entgegen der Einsteckrichtung.

Die AT 8 709 U1 lehrt einen zweiteiligen Verbindungsring zur Sicherung von koaxial ineinander gesteckten Leitungsrohren.

Dementsprechend besteht die Aufgabe der vorliegenden Erfindung darin eine Klemmvorrichtung zur Axialsicherung einer Muffenrohrverbindung vorzuschlagen sowie eine Muffenrohrverbindung samt Klemmvorrichtung vorzuschlagen, die die Nachteile im Stand der Technik überwinden und insbesondere eine Axialsicherung einer Muffenrohrverbindung ermöglichen, die im montierten Zustand eine besonders gute Sicherung ermöglicht und gleichzeitig eine einfache Montage sowie eine einfache Herstellung der Klemmvorrichtung ermöglicht.

Gelöst wird diese Aufgabe im Hinblick auf die Klemmvorrichtung mit den Merkmalen des unabhängigen Anspruchs 1.

Bezogen auf die Muffenrohrverbindung wird diese Aufgabe mit einer Muffenrohrverbindung mit den Merkmalen des Anspruchs 9 gelöst. Vorteilhafte Ausführungsformen der Erfindung sind Gegenstand der nachfolgenden Beschreibung, der Figuren und der Figurenbeschreibung sowie der Unteransprüche.

Grundsätzlich sollen vorrichtungsmäßig offenbarte Merkmale auch als verfahrensmäßig offenbart und beanspruchbar gelten, und umgekehrt.

Die erfindungsgemäße Klemmvorrichtung zur Axialsichtung einer Muffenrohrverbindung zweier Rohrleitungen, insbesondere Abgasrohrleitungen, umfasst zwei Halbringe, die an den jeweiligen Enden in Umfangsrichtung zueinander komplementäre Rastelemente aufweisen und die auf einer Innenseite in axialer Richtung einends eine zum Umgreifen eines Muffenabschnitts einer Rohrmuffe ausgebildete in Umfangsrichtung verlaufende Muffennut und andernends eine ebenfalls in Umfangsrichtung verlaufende Klemmnut aufweisen, wobei in der Klemmnut ein Verformungselement so teilweise aufgenommen angeordnet ist, das es im unmontierten Zustand der Halbringe nach radial innen über die, die Klemmnut in Axialrichtung seitlich begrenzenden Nutwände hinausragt.

Die Erfindung basiert auf der Grundidee, dass eine über das Verformungselement, insbesondere dessen Verformung im montierten Zustand der Halbringe der Klemmvorrichtung, hervorgerufene adhäsive Verpressung eine Sicherung einer, unter Umständen auch glatten, Außenoberfläche einer Rohrleitung ermöglicht, sodass im Zusammenspiel mit der den Muffenabschnitt des benachbarten Rohrs oder der benachbarten Rohrleitung umgreifenden Muffennut eine Axialsicherung oder eine zusätzliche Axialsicherung zwischen den benachbarten und/oder ineinander gesteckten Rohrleitungen der Muffenrohrverbindung erreicht wird.

Besonders bevorzugt können die Halbringe als Gleichteile ausgebildet sein. Dann muss zur Herstellung oder Ausbildung der Klemmvorrichtung lediglich ein Teil zusätzlich zu den Verformungselementen hergestellt werden. Beispielsweise können die Halbringe als Kunststoffteile, besonders bevorzugt als Spritzguss-Kunststoffteile ausgebildet sein. Dies erlaubt eine effektive Produktion einer entsprechenden Vielzahl von Halbringen. Bei einer Ausbildung als Gleichteile ergibt sich zudem der Vorteil, dass bei einer spiegelbildlichen Anordnung der Halbringe zueinander zur Ausbildung eines unterbrochenen Vollrings die Nuten, insbesondere die Muffennut und die Klemmnut in Umfangsrichung aneinander anschließen oder ineinander übergehen. Weiterhin greifen besonders vorteilhaft bei einer Ausbildung als Gleichteile und einer spiegelbildlichen Anordnung der als Gleichteile ausgebildeten Halbringe die an den gegenüberliegenden Enden komplementär ausgebildeten Rastelemente besonders vorteilhaft zur Ausbildung eines unterbrochenen Vollrings ineinander ein.

Gemäß einer vorteilhaften Ausgestaltung der Klemmvorrichtung kann vorgesehen sein, dass die Muffennut in Umfangsrichtung einen durch Ausnehmungen unterbrochenen Nutboden aufweist. Die Unterbrechung des Nutbodens durch Ausnehmungen sorgt für eine materialsparende Ausbildung der Halbringe. Weiter wird dadurch der Querschnitt oder der Durchmesser der Klemmvorrichtung verringert oder minimiert, was wiederrum strömungstechnisch vorteilhaft ist, wenn die Klemmvorrichtung in einem konzentrischen Rohrleitungssystem im Bereich einer innenliegenden Muffenrohrverbindung zum Einsatz kommt, wie beispielsweise in Abgasleitungssystemen. Denn durch einen entsprechend geringen oder minimierten Querschnitt kann der Strömungswiderstand oder zusätzliche Strömungswiderstand aufgrund der Klemmvorrichtung minimiert werden. Jenseits der Ausnehmungen kann besonders vorteilhaft vorgesehen sein, dass die Nutwände der Muffennut über Stege miteinander verbunden sind. Bevorzugt können pro Halbring zwei Ausnehmungen vorgesehen sein, die besonders bevorzugt durch drei Stege in Umfangsrichtung begrenzt sind.

In einer weiteren, vorteilhaften Ausgestaltung kann vorgesehen sein, dass die Rastelemente als Hakenelemente ausgebildet sind, besonders vorteilhaft kann an den gegenüberliegenden Enden der Halbringe jeweils ein nach radial außen und ein nach radial innen orientiertes Hakenelement vorgesehen sein. Gemäß einer besonders vorteilhaften Ausgestaltung kann zudem vorgesehen sein, dass die Hakenelemente ihrerseits eine Vielzahl von in Radialrichtung verlaufenden Rastzähnen aufweisen.

**In** einer zusätzlichen, besonders vorteilhaften Ausführungsform kann weiterhin vorgesehen sein, dass einem ersten Rastelement zugeordnet seitliche Führungshilfen ausgebildet sind. Die seitlichen Führungshilfen können beispielsweise als radial nach außen vorstehende, in Umfangsrichtung verlaufende Stege ausgebildet sein und können das Einführen und Verrasten eines komplementären Rastelements erleichtern oder vereinfachen.

Ebenfalls kann in einer besonders wünschenswerten Ausgestaltung der Klemmvorrichtung vorgesehen sein, dass wenigstens ein, bevorzugt zwei von dem Halbring nach radial außen abstehende Abstandsflügel realisiert sind. Die Abstandsflügel können genutzt werden, um die mit der Klemmvorrichtung gesicherten oder axial gesicherten Rohrleitungen in einer Einbausituation zu führen, insbesondere zu zentrieren. Beispielsweise können die Abstandsflügel genutzt werden, um eine Zentrierung von Rohrleitungen mit Muffenrohrverbindungen zentrisch oder konzentrisch in weiteren Rohren oder Rohrleitungen oder einem Schacht zu erleichtern oder zu ermöglichen. Die Abstandsflügel können bevorzugt monolithisch mit den Halbringen ausgebildet sein. Insgesamt kann vorgesehen sein, dass alle Bestandteile der Halbringe, mit Ausnahme der Verformungselemente, einstückig oder monolithisch ausgebildet sind. Demnach kann vorteilhaft die Klemmvorrichtung aus vier Einzelteilen bestehen, die zwei identische Halbringe und zwei identische Verformungsmittel umfassen kann.

Die Abstandsflügel können bevorzugt so ausgebildet sein, dass in einem radial äußeren Endbereich eine plastische und/oder elastische Verformbarkeit gegeben ist, sodass mit den Abstandsflügeln eine Beabstandung, insbesondere Zentrierung, in unterschiedlichen Situationen, insbesondere zentrisch in Rohrleitungen mit unterschiedlichem Durchmesser, ermöglicht wird.

Gemäß einer weiteren, besonders vorteilhaften Ausführungsform kann vorgesehen sein, dass der/die Abstandsflügel im Bereich der Muffennut angeordnet ist/sind und eine Flügelfläche aufweist, die parallel zur Axialrichtung verläuft. Dadurch kann eine ausreichende Stabilität sowie gleichzeitig eine entsprechende gewünschte oder gewollte Verformbarkeit der Abstandsflügel, insbesondere in einem radial äußeren Endbereich, erreicht werden.

Weiterhin kann in einer vorteilhaften Ausführungsform vorgesehen sein, dass der/die Abstandsflügel im Bereich der Muffennut außenseitig am Halbring angeordnet ist/sind und eine Flügelfläche aufweist/aufweisen, die parallel zur Axialrichtung verläuft.

Durch die Anordnung der Abstandsflügel im Bereich der Muffennut kann eine ausreichend stabile Verbindung oder ein ausreichend stabiler Übergang zwischen dem Halbring und dessen Abstandsflügel geschaffen werden. Die Ausrichtung der Flügelfläche parallel zur Axialrichtung kann den Einbau der Klemmvorrichtung und die Anpassung oder Verformung der Abstandsflügel an die jeweilige Einbausituation verbessern.

In einer weiteren, besonders vorteilhaften Ausführungsform kann vorgesehen sein, dass die Flügelfläche eine einseitige Abschrägung aufweist, die bevorzugt in Axialrichtung einem Ende des Halbrings zugewandt ist, dem die Muffennut zugeordnet ist. Die Abschrägung der Flügelfläche kann so ausgestaltet sein, dass die Flügelfläche mit radialem Abstand zum Halbring verringert oder verschmälert wird, wodurch in vorteilhafter Weise der radial äußere Endabschnitt der Abstandsflügel flexibler oder leichter verformbar wird, was ebenfalls eine vorteilhafte Wirkung an die Verformung der Abstandsflügel zur Anpassung an die Einbausituation und eine Stabile Verbindung mit dem Halbring erreicht.

In einer weiteren, besonders bevorzugten Variante der Klemmvorrichtung kann vorgesehen sein, dass das Rastelement oder die Rastelemente im Bereich der Muffennut außenseitig in den Endbereichen in Umfangsrichtung an oder auf den Halbringen ausgebildet sind. Dies hat den Vorteil, dass die Rastelemente, insbesondere aufgrund der entsprechenden Breite der Muffennut in Axialrichtung eine ausreichende Abstützung der Rastelemente und eine stabile Verbindung oder einen stabilen Übergang zwischen den Halbringen und den Rastelementen oder den Restelementen der Halbringe ermöglicht. Wie oben bereits ausgeführt, sind vorteilhaft auch die Restelemente monolithisch mit den sonstigen Bestandteilen des Halbrings, mit Ausnahme des Verformungselements, ausgebildet. Es kann aber auch vorgesehen sein, dass sich die Rastelemente über die

In einer weiteren, besonders vorteilhaften Ausführung der Klemmvorrichtung kann vorgesehen sein, dass das Verformungselement aus einem weichen Elastomermaterial besteht. Dies ermöglicht nicht nur, dass das Verformungselement einfach in die Klemmnut eingesetzt wird, sondern führt auch zu einer besonders guten adhäsiven Klemmkraft auf die Außenfläche oder Außenoberfläche einer Rohrleitung deren Endabschnitt als Eintauchabschnitt in einen benachbarten Muffenrohrabschnitt eingetaucht oder eingesteckt ist.

Besonders vorteilhaft kann das Verformungselement einen runden Querschnitt aufweisen. Folglich kann das Verformungselement als Halb-O-Ring ausgebildet sein. Das Verformungselement kann sowohl massiv als auch hohl ausgebildet sein.

Der Halbring kann in Axialrichtung einen abgestuften Außendurchmesser aufweisen, wobei der Muffennut ein maximaler Durchmesser und der Klemmnut ein minimaler Außendurchmesser zugeordnet ist.

Die eingangs genannte Aufgabe wird auch durch eine Muffenrohrverbindung zur Verbindung zweier Rohrleitungen, insbesondere Abgasrohrleitungen, gelöst, bei der ein endseitiger Eintauchabschnitt einer ersten Rohrleitung in einen endseitigen Muffenrohrabschnitt einer benachbarten Rohrleitung, insbesondere über dem Muffenabschnitt zugeordneten Dichtmitteln dichtend, eingesteckt ist, wobei erfindungsgemäß vorgesehen ist, dass eine an beiden Rohrleitungen anliegende, insbesondere den Muffenabschnitt umgreifende, Klemmvorrichtung gemäß einer vorrangehenden Ausführungsform angeordnet ist. Dabei wird der Muffenabschnitt des zweiten Rohrs oder der zweiten Rohrleitung entsprechend von der Muffennut umgriffen, wohingegen die erste Rohrleitung eine adhäsive Klemmung durch eine Anpressung des Verformungselements auf die Oberfläche oder Außenoberfläche der Rohrleitung erfährt.

Dementsprechend kann besonders vorteilhaft vorgesehen sein, dass für die Muffenrohrverbindung die Halbringe, insbesondere die Rastelemente so an die Rohrleitungen, insbesondere die Durchmesser der Rohrleitungen, angepasst sind, dass beim Verrasten der Rastelemente eine Anpressung der Verformungselemente an die Rohrleitung, insbesondere die Außenoberfläche der Rohrleitung, benachbart zum Muffenabschnitt erzeugt wird.

Ebenfalls kann in einer vorteilhaften Ausführungsform vorgesehen sein, dass in einem verrasteten Zustand die Halbringe der Klemmvorrichtung die Verformungselemente so adhäsiv an die erste Rohrleitung anpresst, dass im Zusammenwirken mit dem axialen Umgreifen des Muffenabschnitts durch die Muffennut eine Axialsicherung der Rohrleitungen erreicht wird.

Insbesondere hat die erfindungsgemäße Muffenrohrverbindung den Vorteil, dass diese leicht hergestellt werden kann, dass zudem das erste Rohr oder die erste Rohrleitung keine zusätzlichen Merkmale auf der Außenoberfläche, wie beispielsweise Strukturierungen, Überstände oder sonstige Anschlagsmittel aufweisen muss, um die Axialsicherung zu bewerkstelligen und dass trotzdem eine besonders gute Axialsicherung der beiden Rohrleitungen aneinander oder gegeneinander erreicht oder bewirkt wird.

Nachfolgend werden Details oder Einzelheiten der vorliegenden Erfindung anhand von lediglich vorteilhafte Ausführungsbeispiele zeigenden, schematischen Zeichnungen beispielhaft erläutert.

Darin zeigen:
- Fig. 1 a bis d:: Eine schematische Darstellung eines Halbrings zur Ausbildung einer erfindungsgemäßen Klemmvorrichtung gemäß einer ersten Ausführungsform in unterschiedlichen Ansichten;
- Fig. 2a bis c:: verschiedene Ansichten und eine Detaildarstellung einer erfindungsgemäßen Klemmvorrichtung gemäß einer ersten Ausführungsform;
- Fig. 3a bis e:: verschiedene Schnittdarstellungen und Detaildarstellungen eines Halbrings gemäß der Ausführungsform der Fig. 1;
- Fig. 4a bis c: eine erfindungsgemäße Muffenrohrverbindung gemäß einer ersten Ausführungsform;
- Fig. 5:: eine perspektivische Ansicht eines Halbrings zur Ausbildung einer erfindungsgemäßen Klemmvorrichtung in einer zweiten Ausführungsform;
- Fig. 6 a bis b:: eine erfindungsgemäße Muffenrohrverbindung gemäß einer zweiten Ausführungsform.

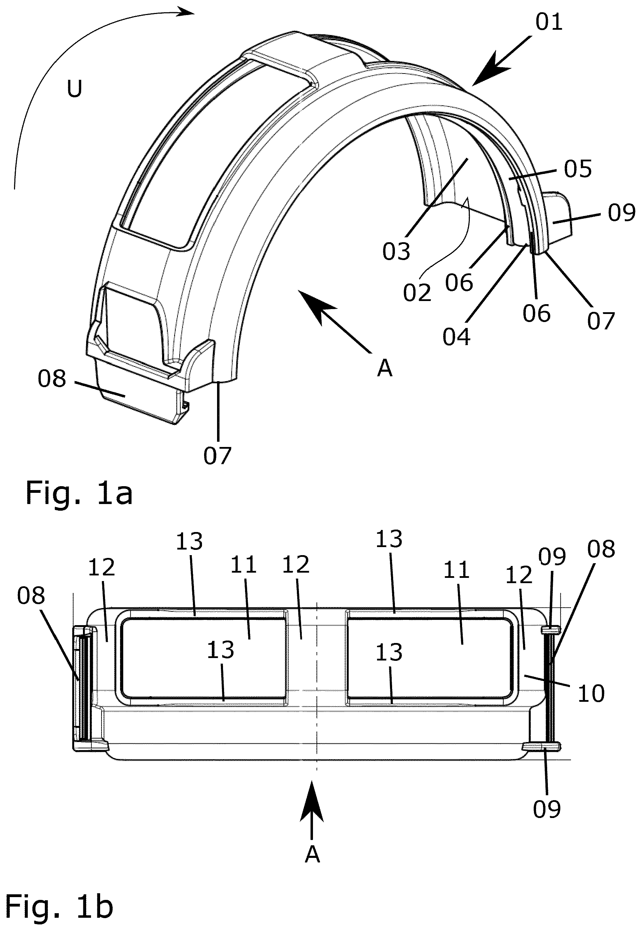

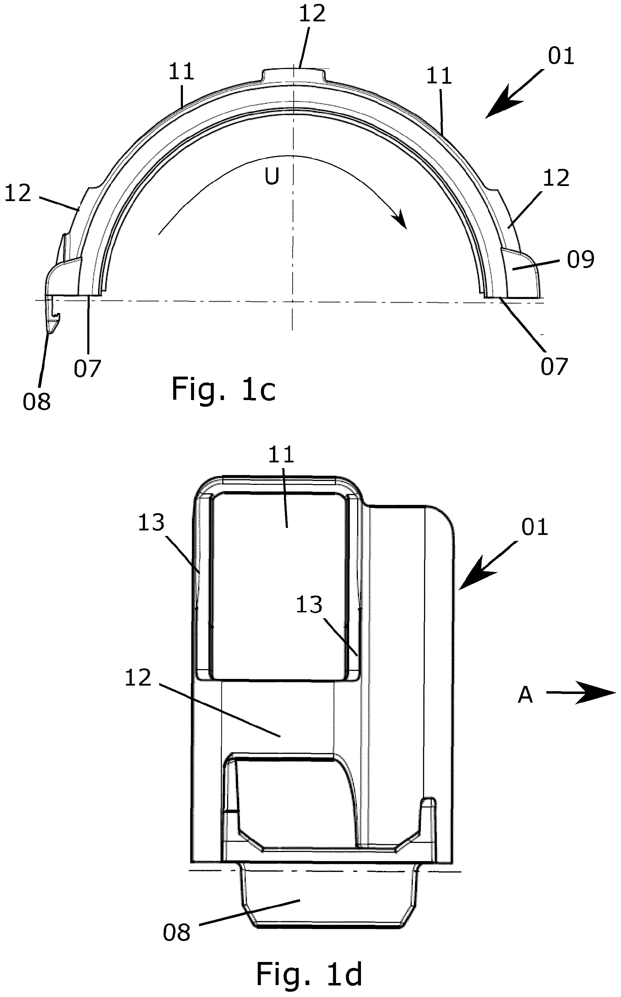

Die Fig. 1a zeigt einen Halbring 01 zur Ausbildung einer erfindungsgemäßen Klemmvorrichtung. Da die Halbringe 01 zur Ausbildung der Klemmvorrichtung bevorzugt als Gleichteile, insbesondere aus Kunststoff, besonders bevorzugt als Spritzgusskunststoff-Gleichteile, ausgeführt sein können, wird nachfolgend auf die Details eines Halbrings 01 eingegangen, die sich dann bei einer Verwendung von identischen Halbringen 01 zur Ausbildung der Klemmvorrichtung in beiden Halbringen 01 entsprechend identisch wiederfinden. Der Halbring 01 weist auf einer Innenoberfläche 02 zwei in axialer Richtung A nebeneinander angeordnete Nuten auf. Dabei handelt sich einerseits um eine Muffennut 03 sowie eine Klemmnut 04. Die Klemmnut 04 nimmt teilweise ein Verformungselement 05 auf. Dies bedeutet mit anderen Worten ausgedrückt, dass in dem in der Fig. 1 dargestellten unmontierten oder nicht montierten Zustand der Halbringe das Verformungselement 05 so teilweise von der Klemmnut 04 aufgenommen ist, dass ein Teil des Verformungselements 05 nach radial innen über die in Axialrichtung A seitlich die Klemmnut 05 begrenzenden Nutwände 06 herausragt.

Der Halbring 01 weist zudem in Umfangsrichtung U an den gegenüberliegenden Enden 07 Rastelemente 08 auf. In der perspektivischen Darstellung der Fig. 1a ist nur eines der Rastelemente 08 deutlich zu erkennen. Am gegenüberliegenden Ende 07 sind seitliche Führhilfen 09 dargestellt, die einem zweiten komplementären, nicht im Detail dargestellten Rastelement zugeordnet sind, die bei dem Verrasten von zwei Halbringen 01 unter Ausbildung einer Klemmvorrichtung eine Führung des komplementären Rastelements 08 bewirken.

In der Fig. 1b ist eine Draufsicht auf den Halbring 01 dargestellt, der auch eine entsprechende Seitenansicht der Rastelemente 08 sowie der Führhilfen 09 umfasst. Zudem ist in der Darstellung der Fig. 1b erkennbar, dass ein Nutboden 10 der Muffennut 03 in Umfangsrichtung durch zwei Ausnehmungen 11 unterbrochen ist, sodass der Nutboden 10 der Muffennut 03 durch drei Stege 12 gebildet wird, die an beiden Seiten in axialer Richtung A in die Nutwände 13 der Muffennut übergehen oder die Nutwände 13 der Muffennut 03 miteinander verbinden.

In der Darstellung der Seitenansicht der Fig. 1c sind nochmals die Ausnehmungen 11 und die Stege 12 erkennbar. Auch das in Umfangsrichtung U an einem Ende 07 des Halbrings 01 überstehende Rastelement 08, welches als nach radial innen gerichtetes Hakenelement ausgebildet ist, ist dargestellt. Auf der gegenüberliegenden Seite oder am gegenüberliegenden Ende 07 des Halbrings 01 sind abermals die Führhilfen 09 dargestellt, die eine seitliche Führung des Rastelements 08 bewirken.

Die Seitenansicht der Fig. 1d zeigt, dass sich das Rastelement 08 in auf einer Außenoberfläche 30 des Halbrings 01 axialer Richtung sowohl über einen Bereich der Muffennut 03 als auch über einen Verbindungsbereich 31 und einen Bereich der Klemmnut 04 erstreckt.

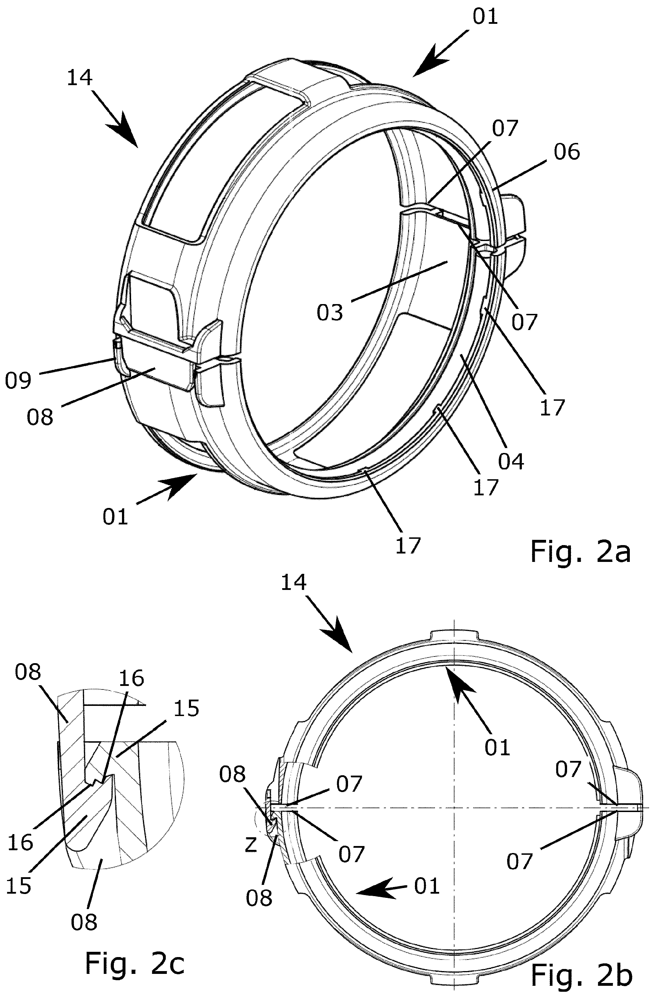

Die Darstellung der Fig. 2a zeigt eine perspektivische Darstellung zweier miteinander verrasteter Halbringe 01 zur Ausbildung einer erfindungsgemäßen Klemmvorrichtung 14. Wie bereits angedeutet, sind die beiden Halbringe 01 als Gleichteile ausgebildet. Wie auch bereits in der Fig. 1a erkennbar, bildet eine in axialer Richtung äußere Nutwand 06 der Klemmnut 04 den in axialer Richtung verlaufenden Abschluss der Klemmvorrichtung 14 und/oder der Halbringe 01.

Die Fig. 2a zeigt auch das Zusammenwirken von den als Hakenelemente 15 ausgebildeten Rastelementen 08 sowie den Führhilfen 09. In den Fig. 2b und dem in der Fig. 2c dargestellten vergrößerten Ausschnitt Z der Darstellung der Fig. 2b ist das Zusammenwirken der Rastelemente 08 nochmals gezeigt. Dabei ist erkennbar, dass jeweils ein nach radial innen gerichtetes als Hakenelement 15 ausgebildetes Rastelement 08 mit einem nach radial außen gerichteten als Hakenelement 15 ausgebildeten Rastelement 08 in Eingriff gebracht ist. Die Hakenelemente 15 sind dabei so ausgerichtet und ausgebildet, dass bei einer Annäherung der Halbringe 01 aneinander oder einer Annäherung der Enden 07 der Halbringe 01 aneinander ein Einrasten oder Einschnappen der Rastelemente 08 in Form der Hakenelemente 15 erfolgt, indem die jeweils die äußeren und über das Ende 07 vorstehenden Rastelemente 08 mit deren Hakenelementen 15 über die komplementären und dementsprechenden leicht gegenüber dem Ende 07 zurückversetzten inneren Hakenelemente 15 geschoben und verrastet werden.

Die Fig. 2c zeigt in diesem Zusammenhang im Detail, dass die Hakenelemente 15 ihrerseits eine Vielzahl von Rastzähnen 16 aufweisen können, um ein Verrasten der Hakenelemente 15 in unterschiedlichen Stellungen zu erlauben und die Verrastung insgesamt zu verbessern.

Wie bereits in der Fig. 1a erkennbar aber dort noch nicht ausführlich beschrieben, kann die Klemmnut 04 in einer Nutwand 06 oder in beiden Nutwänden 06 Vorsprünge 17 aufweisen, die die Halterung oder Befestigung des Verformungselements 05 erleichtern.

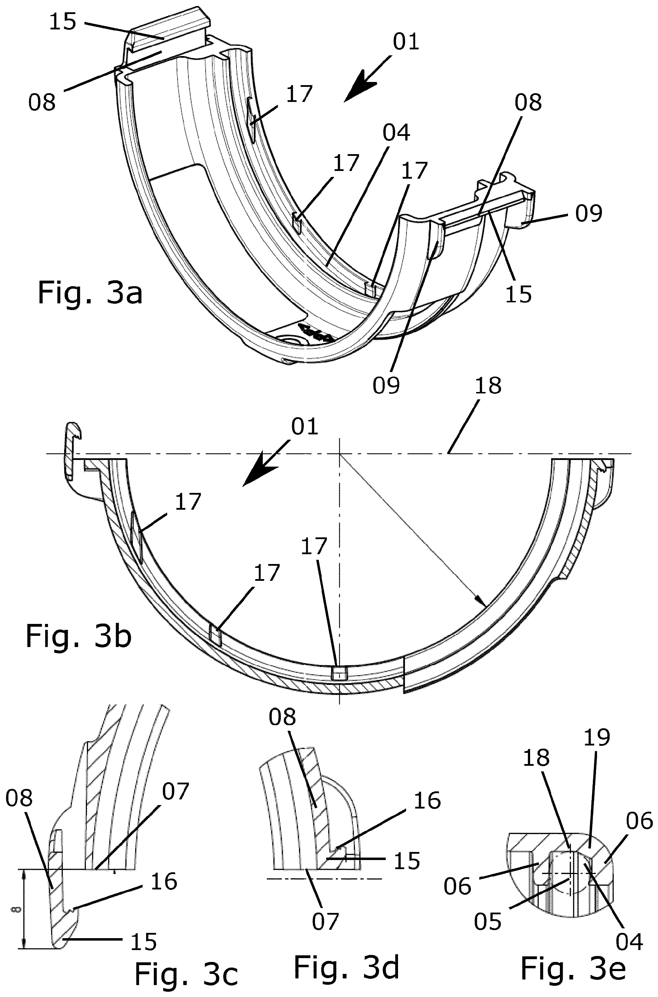

Die Fig. 3a zeigt nochmals einen Halbring 01 gemäß der Ausführungsform der Fig. 1a, bei der zur besseren Veranschaulichung das Verformungselement 05 entfernt wurde. Dadurch wird der Blick auf die Vorsprünge 17 erleichtert, die die Befestigung oder Halterung des Verformungselements 05 in der Klemmnut 04 erleichtern.

Wie in der Fig. 3b noch besser erkennbar, kann vorteilhaft vorgesehen sein, dass die Vorsprünge 17 im Wesentlichen senkrecht zur Öffnung oder Öffnungsfläche 32 des Halbrings 01 verlaufen können, um das Verformungselement 05 auch beim Verrasten oder Verschließen der Klemmvorrichtung durch eine Relativbewegung der Halbringe 01 aufeinander zu gegen ein Verschieben oder Herauswalken zu sichern.

Die Fig. 3c zeigt nochmals eine Detaildarstellung eines ersten Rastelements 08 als nach radial innen gerichtetes Hakenelement 15 sowie die Rastzähne 16. Das komplementäre Rastelement 08, welches als nach radial außen gerichtetes Hakenelement 15 mit Rastzähnen 16 ausgebildet ist, ist in der Fig. 3d dargestellt.

In der Fig. 3e ist der Querschnitt der Klemmnut 04 in Umfangsrichtung dargestellt. Es ist ersichtlich, dass der Nutgrund 18 der Klemmnut 04 einen Knick 19 umfasst. Dies verbessert die Axialsicherung eines an das Verformungselement 05 angepressten Rohrs oder Rohrleitung.

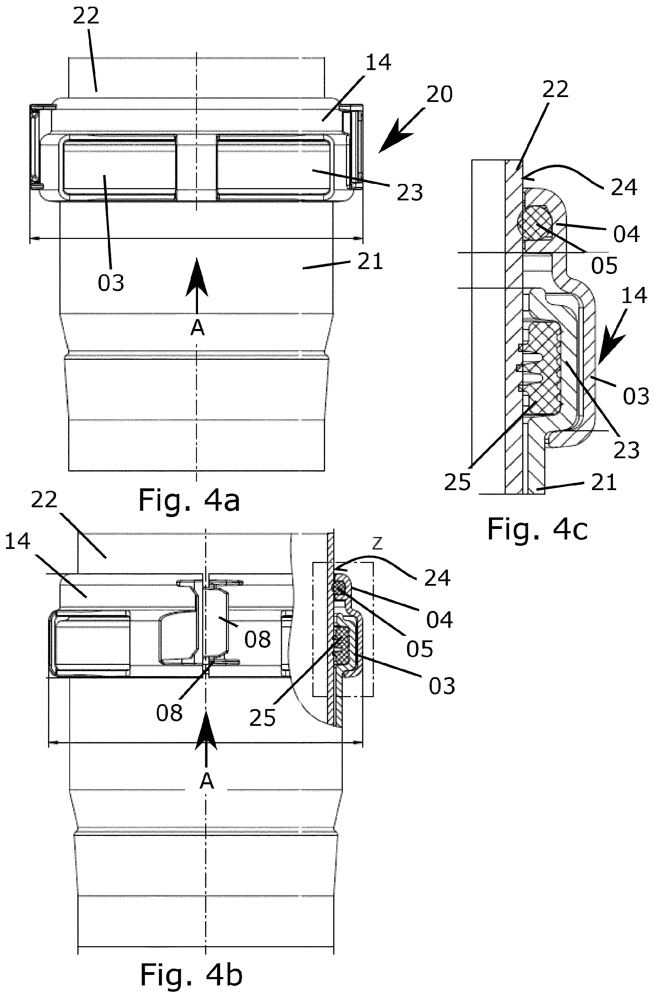

Die Fig. 4a zeigt eine erfindungsgemäße Muffenrohrverbindung 20 mit einer ersten Rohrleitung 21 und einer zweiten Rohrleitung 22 sowie einer Klemmvorrichtung 14, bevorzugt gemäß den Darstellungen der Fig. 1 bis 3. Die Rohrleitung 21 weist endseitig einen Muffenabschnitt 23 auf. In diesen Muffenabschnitt 23 taucht ein in der Darstellung der Fig. 4a nicht dargestellter Eintauchabschnitt der zweiten Rohrleitung 22 ein. Die Klemmvorrichtung 14 umgreift mit der Muffennut 03 den Muffenabschnitt 23 der ersten Rohrleitung 21, sodass eine Festlegung der Klemmvorrichtung 14 in axialer Richtung gegenüber der ersten Rohrleitung 21 bewirkt wird, der im Wesentlichen durch die Nutwände 13 der Muffennut 03 erreicht wird. Wie mit Bezug zu den Fig. 4b und 4c noch im Detail beschriebenen werden wird, führt die Klemmvorrichtung 14 auch zu einer Sicherung des zweiten Rohrs oder der zweiten Rohrleitung 22 in axialer Richtung A.

Dies wird durch das teilweise in der Klemmnut 04 aufgenommene Verformungselement 05 bewerkstelligt, wie beispielsweise in der Fig. 4b dargestellt ist. Denn die Klemmvorrichtung 14 ist, insbesondere im Hinblick auf die Rastelemente 08 und die Halbringe 01 so ausgebildet, insbesondere so dimensioniert, dass ein Verrasten der Rastelemente 08 und damit ein Verrasten der Halbringe 01 eine Anpressung des Verformungselements 05 an eine Außenoberfläche 24 der zweiten Rohrleitung 22 bewirkt. Dadurch entsteht aufgrund des weichen Materials des Verformungselements 05, beispielsweise aus Elastomermaterial, eine adhäsive axiale Verpressung, die zusammen mit der axialen Sicherung der Klemmvorrichtung 14 gegenüber dem Muffenabschnitt 23 der Rohrleitung 21 eine gesamte axiale Sicherung der Rohrleitungen 21 und 22 relativ zueinander bewirkt. Die Klemmvorrichtung 14 kann somit eine Teilsicherung oder Hemmung einer Bewegung in Axialrichtung A durch das im Muffenabschnitt 23 aufgenommene Dichtelement 25 ergänzen, insbesondere so ergänzen, dass eine Axialsicherung derart bereitgestellt wird, dass eine Bewegung der Rohrleitungen 21, 22 zueinander oder gegeneinander in axialer Richtung A verhindert wird.

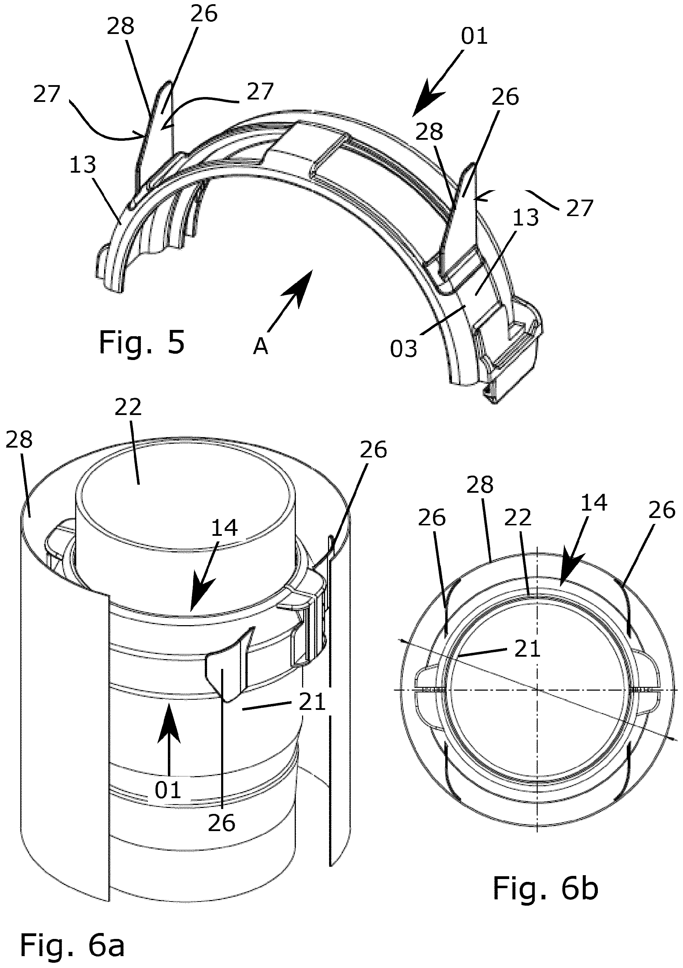

Die Fig. 5 zeigt eine zweite Ausführungsform von Halbringen 01 zur Ausbildung einer erfindungsgemäßen Klemmvorrichtung 14. Der wesentliche Unterschied zwischen der Ausführungsform der Halbringe 01 gemäß der Fig. 1 bis 4 besteht in den Abstandsflügeln 26. Pro Halbring 01 sind vorteilhaft zwei Abstandsflügel 26 vorgesehen.

Die Abstandsflügel 26 sind bevorzugt im Bereich der Muffennut angeordnet oder haben den Übergang zum sonstigen Halbring 01 im Bereich der Muffennut 03 insbesondere im Bereich von seitlichen Stegen 12 des Nutbodens 10. Die Fig. 5a zeigt auch, dass die Abstandsflügel 26 eine Flügelfläche 27 oder zwei im Wesentlichen parallele Flügelflächen 27 aufweisen, die im Wesentlichen parallel zur Axialrichtung A verlaufen. Wie in der Darstellung der Fig. 5b erkennbar, sind die Abstandsflügel 26 mit zunehmendem Abstand von dem Halbring 01 leicht verjüngt ausgebildet. Die Abstandsflügel 26 können zudem eine Abschrägung 28 umfassen, die auch in axialer Richtung mit zunehmendem Abstand vom Halbring 01 eine abnehmende Breite oder eine abnehmende Tiefe der Flügelfläche 27 verursachen.

Sowohl die abnehmende Stärke als auch durch die Abschrägung 28 hervorgerufene verringerte Breite der Abstandsflügel 26 und deren Flügelflächen 27 führt zu einer Flexibilisierung der Abstandsflügel 26, insbesondere mit zunehmendem Abstand vom Halbring 01. Diese kann genutzt werden, um einen Einbau der Klemmvorrichtung in unterschiedliche Einbausituationen zu ermöglichen, wie beispielsweise im Rahmen der Fig. 6 dargestellt. Gleichzeitig wird ein sicherer undstabiler Übergang der Abstandsflügel zu den sonstigen Bestandteilen des, abgesehen vom Verformungselement 05, vorteilhaft monolithischen Halbring 01 ermöglicht.

Die Fig. 6a zeigt eine Muffenrohrverbindung für eine konzentrische Anordnung von Rohrleitungen. Zusätzlich zu einer ersten Rohrleitung 21 und einer zweiten Rohrleitung 22 ist eine dritte Rohrleitung 28 konzentrisch um die Rohrleitungen 21 und 22 angeordnet. Eine derartige Anordnung findet beispielsweise bei Abgasanlagen, insbesondere von Heizungen, Anwendung. Beispielsweise kann die äußere Rohrleitung 28 aus einem Edelstahlmaterial gefertigt sein. Die inneren Rohrleitungen 21 und 22 sowie die Klemmvorrichtung 14 können bevorzugt aus einem Kunststoffmaterial gefertigt sein. Erkennbar ist, dass die Abstandsflügel 26 eine Verformung erfahren haben und in der verformten Position eine Zentrierung der Rohrleitungen 21, 22 innerhalb der Rohrleitung 28 ermöglichen.

### Bezugszeichen

- 01: Halbring
- 02: Innenoberfläche
- 03: Muffennut
- 04: Klemmnut
- 05: Verformungselement
- 06: Nutwand
- 07: Ende
- 08: Rastelement
- 09: Führhilfe
- 10: Nutboden
- 11: Ausnehmung
- 12: Steg
- 13: Nutwand
- 14: Klemmvorrichtung
- 15: Hakenelement
- 16: Rastzahn
- 17: Vorsprung
- 18: Nutgrund
- 19: Knick
- 20: Muffenrohrverbindung
- 21: erste Rohrleitung
- 22: zweite Rohrleitung
- 23: Muffenabschnitt
- 24: Außenoberfläche
- 25: Dichtelement
- 26: Abstandsflügel
- 27: Flügelfläche
- 28: Abschrägung
- 29: Rohrleitung
- 30: Außenoberfläche
- 31: Verbindungsbereich
- 32: Öffnungsfläche

- A: Axialrichtung
- U: Umfangsrichtung

## Patentansprüche

1. Klemmvorrichtung (14) zur Axialsicherung einer Muffenrohrverbindung (20) zweier Rohrleitungen (21, 22), insbesondere Abgasrohrleitungen, umfassend zwei Halbringe (01), die an den jeweiligen Enden (07) in Umfangsrichtung (U) zueinander komplementäre Rastelemente (08) aufweisen und die auf einer Innenseite in axialer Richtung (A) einends eine zum Umgreifen eines Muffenabschnitt (23) einer Rohrmuffe ausgebildete in Umfangsrichtung (U) verlaufende Muffennut (03) und andernends eine ebenfalls in Umfangsrichtung (U) verlaufende Klemmnut (04) aufweisen, wobei in der Klemmung ein Verformungselement (05) so teilweise aufgenommen angeordnet ist, dass es im unmontierten Zustand nach radial innen über die Klemmnut (04) in Axialrichtung seitlich begrenzenden Nutwände (06, 13) hinausragt.

2. Klemmvorrichtung (14) nach Anspruch 1,
**dadurch gekennzeichnet,**
**dass** die Muffennut (03) in Umfangsrichtung (U) einen durch Ausnehmungen (11) unterbrochenen Nutboden (10) aufweist.

3. Klemmvorrichtung (14) nach Anspruch 1 oder 2,
**dadurch gekennzeichnet,**
**dass** die Rastelemente (08) als Hakenelemente ausgebildet sind.

4. Klemmvorrichtung (14) nach Anspruch 3,
**dadurch gekennzeichnet,**
**dass** einem ersten Rastelement (08) zugeordnet seitliche Führhilfen (09) ausgebildet sind.

5. Klemmvorrichtung (14) nach Anspruch 3 oder 4,
**dadurch gekennzeichnet,**
**dass** die Rastelemente (08) im Bereich der Muffennut (03) angeordnet sind.

6. Klemmvorrichtung (14) nach einem der vorangehenden Ansprüche,
**gekennzeichnet durch**
wenigstens ein, bevorzugt zwei, von dem Halbring (01) nach radial außen abstehenden Abstandsflügel (26).

7. Klemmvorrichtung (14) nach Anspruch 6,
**dadurch gekennzeichnet,**
**dass** der Abstandsflügel (26) im Bereich der Muffennut (03) angeordnet ist und eine Flügelfläche (27) aufweist, die parallel zur Axialrichtung (A) verläuft.

8. Klemmvorrichtung (14) nach einem der vorangehenden Ansprüche,
**dadurch gekennzeichnet,**
**dass** das Verformungselement (05) aus einem weichen Elastomermaterial besteht.

9. Muffenrohrverbindung (20) zur Verbindung zweier Rohrleitungen (21, 22), insbesondere Abgasrohrleitungen, bei der ein endseitiger Eintauchabschnitt einer ersten Rohrleitung (21) in einen endseitigen Muffenrohrabschnitt einer benachbarten Rohrleitung (22), insbesondere über dem Muffenrohrabschnitt zugeordneten Dichtmittel (25) dichtend, eingesteckt ist,
**gekennzeichnet durch**
eine an beiden Rohrleitungen (21, 22) anliegende, insbesondere den Muffenrohrabschnitt umgreifende, Klemmvorrichtung (14) nach einem der Ansprüche 1 bis 8.

10. Muffenrohrverbindung (20) nach Anspruch 9,
**dadurch gekennzeichnet,**
**dass** die Halbringe (01), insbesondere die Rastelemente (08) so an die Rohrleitungen (21, 22), insbesondere die Durchmesser der Rohrleitungen (21, 22), angepasst sind, dass beim Verrasten der Rastelemente (08) eine Anpressung der Verformungselemente (05) an die erste Rohrleitung (21) benachbart zum Muffenrohrabschnitt erzeugt wird.

11. Muffenrohrverbindung (20) nach Anspruch 9 oder 10,
**dadurch gekennzeichnet,**
**dass** in einem verrasteten Zustand der Halbringe (01) der Klemmvorrichtung (14) die Verformungselemente (05) so adhäsiv an die erste Rohrleitung (21) anpresst, dass im Zusammenwirken mit dem axialen Umgreifen des Muffenrohrabschnitts durch die Muffennut (03) eine Axialsicherung der Rohrleitungen (21, 22) erreicht wird.

## Claims

1. A clamping device (14) for axially securing a bell-end pipe coupling (20) of two pipes (21, 22), in particular exhaust pipes, the clamping device (14) comprising two half rings (01), which have mutually complementary interlocking elements (08) on the respective ends (07) in the circumferential direction (U) and which have a bell-end groove (03) on an inner side at one end in the axial direction (A), the bell-end groove (03) being configured to engage a bell-end portion (23) of a pipe bell end and extending in the circumferential direction (U), and a clamping groove (04) at the other end, the clamping groove (04) also extending in the circumferential direction (U), wherein a deformable element (05) is at least partially received in the clamping groove (04) in such a manner that, in the uninstalled state, it protrudes radially inward beyond groove walls (06, 13) laterally defining the clamping groove (04) in the axial direction.

2. The clamping device (14) according to claim 1,
**characterized in that**
in the circumferential direction (U), the bell-end groove (03) has a groove bottom (10) interrupted by recesses (11).

3. The clamping device (14) according to claim 1 or 2,
**characterized in that**
the interlocking elements (08) are hook elements.

4. The clamping device (14) according to claim 3,
**characterized in that** lateral guides (09) for a first interlocking element (08) are formed.

5. The clamping device (14) according to claim 3 or 4,
**characterized in that**
the interlocking elements (08) are disposed in the area of the bell-end groove (03).

6. The clamping device (14) according to any one of the preceding claims,
**characterized by**
at least one spacer tab (26), preferably two spacer tabs, projecting radially outward from the half ring (01).

7. The clamping device (14) according to claim 6,
**characterized in that**
the spacer tab (26) is disposed in the area of the bell-end groove (03) and has a tab surface (27) extending parallel to the axial direction (A).

8. The clamping device (14) according to any one of the preceding claims,
**characterized in that**
the deformable element (05) is made of a soft elastomer material.

9. A bell-end pipe coupling (20) for connecting two pipes (21, 22), in particular exhaust pipes, in which a male portion at the end of a first pipe (21) is inserted into a bell-end pipe portion at the end of an adjacent pipe (22), in particular in a sealing manner via sealing means (25) associated with the bell-end pipe portion,
**characterized by**
a clamping device (14) according to any one of claims 1 to 8, the clamping device (14) being in contact with both pipes (21, 22) and in particular engaging the bell-end pipe portion.

10. The bell-end pipe coupling (20) according to claim 9,
**characterized in that**
the half rings (01), in particular the interlocking elements (08), are adapted to the pipes (21, 22), in particular the diameters of the pipes (21, 22), in such a manner that when the interlocking elements (08) interlock, the deformable elements (05) are pressed against the first pipe (21) adjacent to the bell-end pipe portion.

11. The bell-end pipe coupling (20) according to claim 9 or 10,
**characterized in that**
in an interlocked state of the half rings (01) of the clamping device (14), the deformable elements (05) are adhesively pressed against the first pipe (21) in such a manner that, in interaction with the bell-end groove's (03) axial engaging of the bell-end pipe portion, the pipes (21, 22) are axially secured.

## Revendications

1. Dispositif de serrage (14) destiné à fixer axialement un raccord de tuyau tulipe (20) de deux tuyaux (21, 22), notamment de tuyaux d'échappement, le dispositif de serrage (14) comprenant deux demi-bagues (01), qui ont des éléments d'encliquetage (08) mutuellement complémentaires aux extrémités (07) respectives dans la direction circonférentielle (U) et qui ont une rainure de tulipe (03) sur un côté intérieur à une extrémité dans la direction axiale (A), la rainure de tulipe (03) étant configurée pour venir en prise sur une partie tulipe (23) d'une tulipe de tuyau et s'étendant dans la direction circonférentielle (U), et une rainure de serrage (04) à l'autre extrémité, la rainure de serrage (04) s'étendant aussi dans la direction circonférentielle (U), dans lequel un élément déformable (05) est reçu au moins partiellement dans la rainure de serrage (04) de telle manière que, dans l'état non monté, il dépasse, radialement vers l'intérieur, des parois de rainure (06, 13) définissant latéralement la rainure de serrage (04) dans la direction axiale.

2. Dispositif de serrage (14) selon la revendication 1,
**caractérisé en ce que**
dans la direction circonférentielle (U), la rainure de tulipe (03) a un fond de rainure (10) interrompu par des évidements (11).

3. Dispositif de serrage (14) selon la revendication 1 ou 2,
**caractérisé en ce que**
les éléments d'encliquetage (08) sont des éléments en forme de crochet.

4. Dispositif de serrage (14) selon la revendication 3,
**caractérisé en ce que**
des guides (09) latéraux pour un premier élément d'encliquetage (08) sont formés.

5. Dispositif de serrage (14) selon la revendication 3 ou 4,
**caractérisé en ce que**
les éléments d'encliquetage (08) sont disposés dans la zone de la rainure de tulipe (03).

6. Dispositif de serrage (14) selon l'une quelconque des revendications précédentes,
**caractérisé par**
au moins une patte d'espacement (26), de préférence deux pattes d'espacement, faisant saillie radialement vers l'extérieur sur la demi-bague (01).

7. Dispositif de serrage (14) selon la revendication 6,
**caractérisé en ce que**
la patte d'espacement (26) est disposée dans la zone de la rainure de tulipe (03) et a une surface de patte (27) s'étendant parallèlement à la direction axiale (A).

8. Dispositif de serrage (14) selon l'une quelconque des revendications précédentes,
**caractérisé en ce que**
l'élément déformable (05) est en matériau élastomère doux.

9. Raccord de tuyau tulipe (20) destiné à raccorder deux tuyaux (21, 22), notamment des tuyaux d'échappement, dans lequel une partie mâle à l'extrémité d'un premier tuyau (21) est insérée dans une partie de tuyau tulipe à l'extrémité d'un tuyau adjacent (22), notamment de manière étanchant à l'aide de moyens d'étanchéité (25) associés à la partie de tuyau tulipe,
**caractérisé par**
un dispositif de serrage (14) selon l'une quelconque des revendications 1 à 8, le dispositif de serrage (14) étant en contact avec les deux tuyaux (21, 22) et notamment en prise sur la partie de tuyau tulipe.

10. Raccord de tuyau tulipe (20) selon la revendication 9,
**caractérisé en ce que**
les demi-bagues (01), notamment les éléments d'encliquetage (08), sont adaptées aux tuyaux (21, 22), notamment aux diamètres des tuyaux (21, 22), de telle manière que lors de l'encliquetage des éléments d'encliquetage (08), les éléments déformables (05) sont pressés contre le premier tuyau (21) à côté de la partie de tuyau tulipe.

11. Raccord de tuyau tulipe (20) selon la revendication 9 ou 10,
**caractérisé en ce que**
dans un état encliqueté des demi-bagues (01) du dispositif de serrage (14), les éléments déformables (05) sont pressés de manière adhésive contre le premier tuyau (21) de telle manière qu'en interaction avec la prise axial de la rainure de tulipe (03) sur la partie de tuyau tulipe, les tuyaux (21, 22) sont fixés axialement.
